# EUROPEAN PATENT APPLICATION

(11) **EP 3 114 923 A1**
(43) Date of publication of application: **11.01.2017**
(21) Application number: 16177427.8
(22) Date of filing: 01.07.2016
(51) Int. Cl.: A01K 1/01

(54) **TOILET FOR PET CATS**

(30) Priority: 10.07.2015 CN 201510405698; 10.07.2015 CN 201520498206 U
(71) Applicant: Jiangsu Slungshot Information Technology Co., Ltd, Yancheng City, Jiangsu Province 224055 (CN)
(72) Inventor: XIE, Jin, Yandu New District, Yancheng City Jiangsu Province, 224055 (CN); QIU, Bin, Yandu New District, Yancheng City Jiangsu Province, 224055 (CN)
(74) Representative: 2K Patentanwälte Blasberg Kewitz & Reichel

(57) **Abstract**

The present invention relates to a toilet for pet cats. When the toilet is at an initial state, cat litter isolation boards are closed, a cleaning support is positioned at an initial position, cat litter is injected onto a grid layer from a cat litter storage chamber on the upper side via a semi-closed rotating shaft, and the cleaning support moves transversely to push cat litter to be flat and push redundant cat litter into a cat litter collecting box; and when the toilet is at a working state, after the cat litter adsorbs excrement of the pet cat, the cleaning support moves transversely to trigger a one-way lock of a cat litter valve, the cat litter isolation boards are synchronously opened under the driving of a connecting rod frame, the cat litter is bled to the cat litter collecting box on the lower side gradually via the grid layer, and meanwhile, a cleaning fork pushes the excrement of the cat to continuously move transversely till the cleaning support pushes a sealing cover open, the excrement of the cat drops into a cat excrement collecting box, a weight inductor is used to weigh the cat excrement collecting box, a trigger will be touched when the cat excrement collecting box is opened, and a collecting box automatic-furling support automatically furls to seal a bag so as to achieve an effect of isolating smell.

## Description

### TECHNICAL FIELD

The present invention relates to a toilet for pet cats, belonging to the technical field of toilets for pet cats.

### BACKGROUND ART

Owing to the improvement of people's material living standards, the requirement to spiritual life is also promoted gradually, and more and more people like keeping pet cats. The pet cats relieve the bowels everywhere indoors especially owners go out although they are very lovely, so the owners feel very troubled with direct influence on the indoors environmental sanitation.

A form of urinal pads for pet cats is also employed in the existing technologies to provide a defecation place for pet cats, but lacks an automatic cleaning function, thus being low in automation degree and not very convenient to clean.

### SUMMARY OF THE INVENTION

The present invention is directed to provide a toilet for pet cats, which is used for performing automatic cleaning by employing cat litter and realizes the purpose of automatically cleaning excrement of pet cats.

The present invention adopts the following technical solutions:
A toilet for pet cats comprises a grid layer allowing pet cats to excrete, a group of cat litter isolation boards which can be simultaneously opened and closed under the driving of a connecting rod frame are disposed on the lower portion of the grid layer, and the cat litter isolation boards are locked via a cat litter valve; a cleaning support capable of moving transversely is disposed above the grid layer and moves transversely along the direction of screw rods under the driving of a main drive gearbox, and a cleaning fork is disposed under the cleaning support; when the toilet is at an initial state, the cat litter isolation boards are closed, the cleaning support is at an initial position, cat litter is injected onto the grid layer from a cat litter storage chamber on the upper side via a semi-closed rotating shaft, and the cleaning support moves transversely to push the cat litter to be flat and push redundant cat litter into the cat litter collecting box; and when the toilet is at a working state, after the cat litter adsorbs excrement of the pet cat, the cleaning support 1 moves transversely to trigger a one-way lock of the cat litter valve, the cat litter isolation boards are synchronously opened under the driving of the connecting rod frame, the cat litter is gradually bled into the cat litter collecting box on the lower side via the grid layer, and meanwhile, a cleaning fork pushes the excrement of the cat to continuously move transversely till the cleaning support pushes a sealing cover open, the excrement of the cat drops into a cat excrement collecting box, and a weight inductor is used to weigh the cat excrement collecting box. A trigger is touched when the cat excrement collecting box is opened, and a collecting box automatic-furling support automatically furls to seal a bag so as to achieve a purpose of isolating smell.

Further, the toilet for pet cats can take the shape of a rectangular body.

Further in a possible embodiment, the drive gearbox drives the cleaning support to move transversely along screw rods via a bevel gear.

Furthermore in a possible embodiment, a pair of screw rods is disposed.

Further in a possible embodiment, a detachable sealing cover is also disposed on the top of the toilet for pet cats, and is also equipped with a storage space for accommodating garbage bags and deodorant.

The present invention has the technical effects that:
1) A defecation place is provided for pet cats.
2) Excrement of the pet cats is automatically cleaned.
3) The use is convenient and the automation degree is high.
4) The present invention is ingenious in structural design and has wide prospects of popularization and application.

### BRIEF DESCROPTION OF THE DRAWINGS

FIG.1 is a stereogram of an exterior structure of the toilet for pet cats.
FIG.2 is a stereogram of main components inside the toilet for pet cats of the present invention.
FIG.3 is an enlarged view of a site A in FIG.2.
FIG.4 is a side sectional view of the toilet for pet cats of the present invention.
FIG.5 is a stereoscopic schematic diagram of the toilet for pet cats of the present invention when the cat litter isolation boards are closed.
FIG.6 is a front schematic diagram the toilet for pet cats of the present invention when the cat litter isolation boards are closed.
FIG.7 is a stereoscopic schematic diagram of the toilet for pet cats of the present invention when the cat litter isolation boards are opened.
FIG.8 is a front schematic diagram of the toilet for pet cats of the present invention when the cat litter isolation boards are opened.
FIG.9 is a front sectional view of the toilets for pet cats of the present invention.
   In FIGs., the cleaning support 1, the cleaning fork 1a, the screw rods 2, the main drive gearbox 3, the deodorant storage box 4, the cat litter valve 5, the connecting rod frame 6, the cat litter isolation boards 7, the cat excrement weight inductor, the cat excrement collecting box 9, the cat litter collecting box 10, the cat litter storage chamber 11, the semi-closed rotating shaft 12, the collecting box automatically-furling support 13, the support closing switch 13a and the sealing cover 14 are marked.

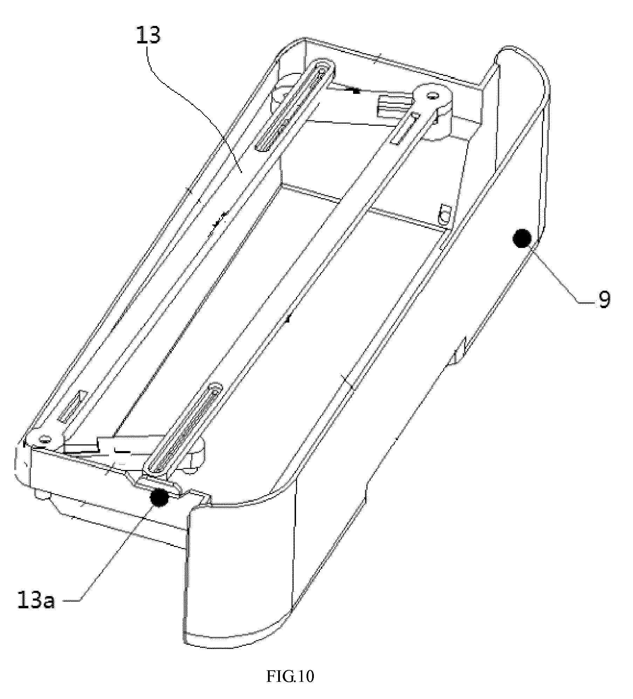

FIG.10 is a structural schematic diagram when the cat excrement collecting box furling support is at an unfurled state.

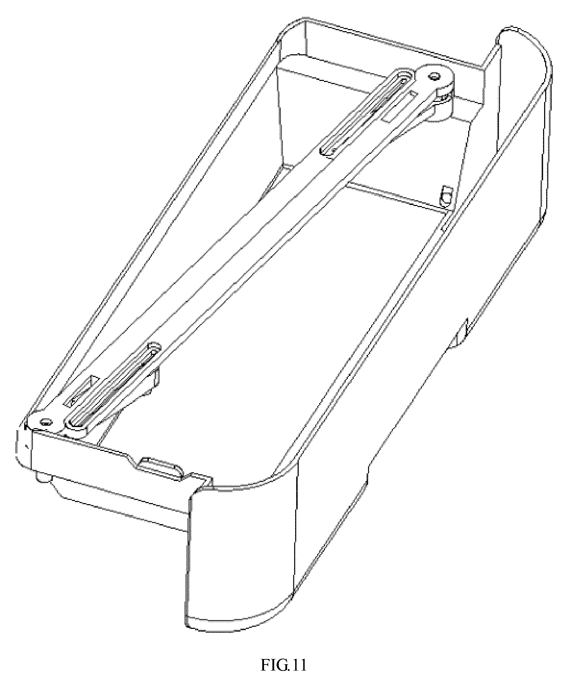

FIG.11 is a structural schematic diagram when the cat excrement collecting box furling support is at a folded state.

### DETAILED DESCRIPTIONS OF THE PREFERRED EMBODIMENTS

The present invention is further illustrated as below in conjunction with attached drawings and specific embodiments.

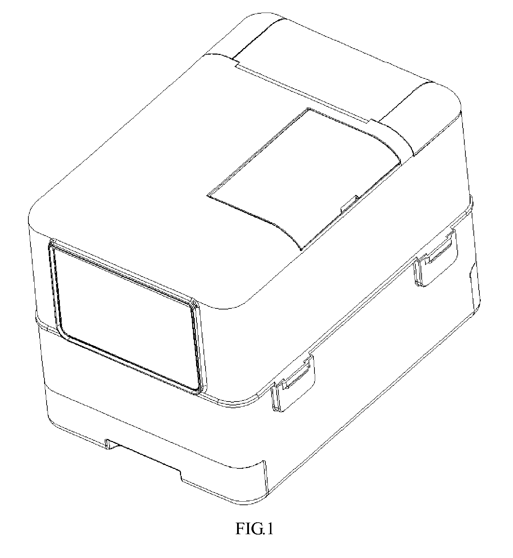

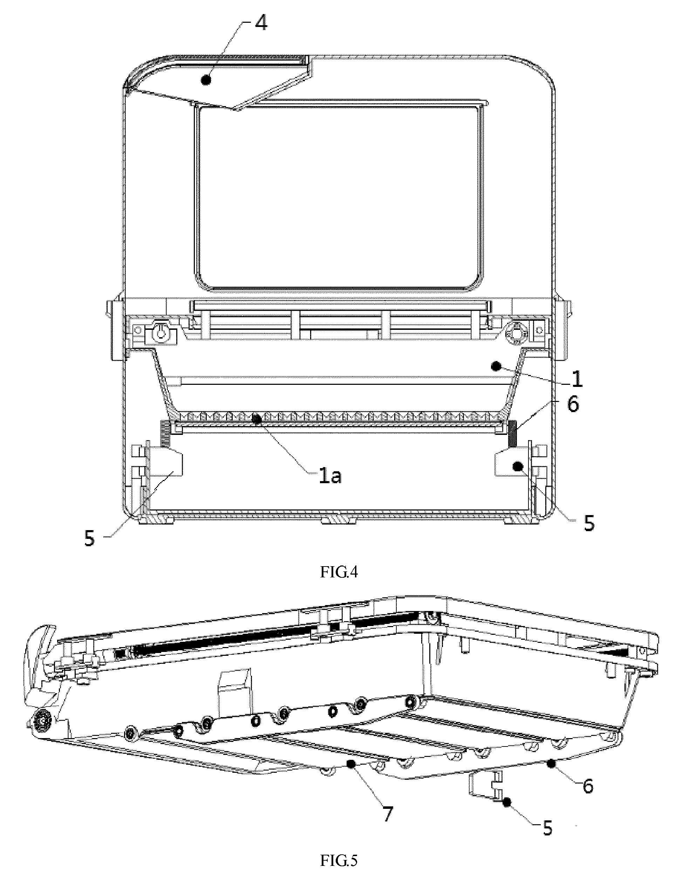

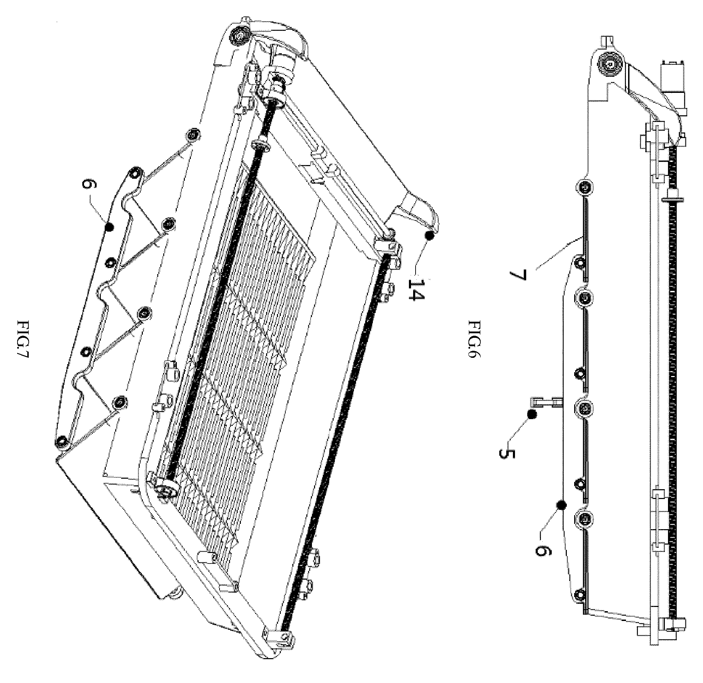

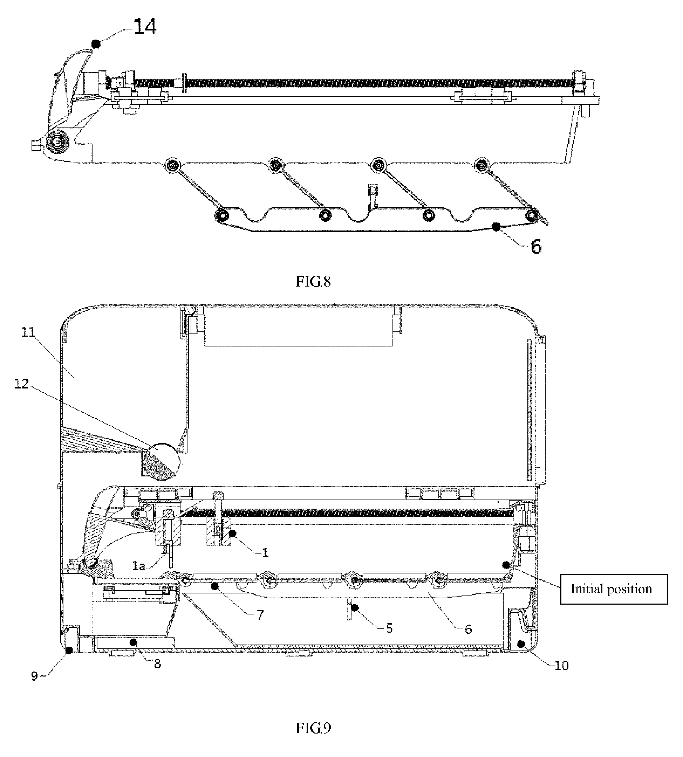

By reference to FIG.1-FIG.9, a toilet for pet cats comprises a grid layer allowing pet cats to excrete, a group of cat litter isolation boards 7 which can be simultaneously opened and closed under the driving of a connecting rod frame 6 are disposed on the lower portion of the grid layer, and the cat litter isolation boards 7 are locked via a cat litter valve 5; a cleaning support 1 capable of moving transversely is disposed above the grid layer and moves transversely along the direction of screw rods 2 under the driving of a main drive gearbox 3, and a cleaning fork 1a is disposed under the cleaning support 1; when the toilet is at an initial state, the cat litter isolation boards 7 are closed, the cleaning support 1 is at an initial position, cat litter is injected onto the grid layer from a cat litter storage chamber 11 on the upper side via a semi-closed rotating shaft 12, and the cleaning support 1 moves transversely to push the cat litter to be flat and push redundant cat litter into the cat litter collecting box 10; and when the toilet is at a working state, after the cat litter adsorbs excrement of the pet cat, the cleaning support 1 moves transversely to trigger a one-way lock of the cat litter valve 5, the cat litter isolation boards 7 are synchronously opened under the driving of the connecting rod frame 6, the cat litter is gradually bled into the cat litter collecting box 10 on the lower side via the grid layer, and meanwhile, the cleaning fork 1a pushes the excrement of the cat to continuously move transversely till the cleaning support 1 pushes a sealing cover 14 open, the excrement of the cat drops into a cat excrement collecting box 9, a weight inductor is used to weigh the cat excrement collecting box 9, a trigger is touched when the cat excrement collecting box is opened, and a collecting box automatic-furling support 13 automatically furls to seal a bag so as to achieve a purpose of isolating smell.

By reference to FIG.1, the toilet for pet cats takes the shape of a rectangular body.

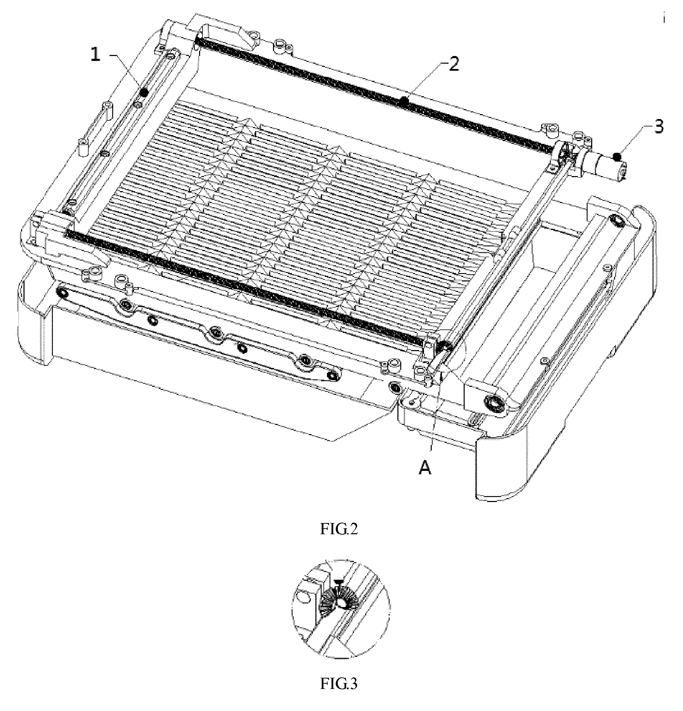

By reference to FIG.2 and FIG.3, the drive gearbox 3 drives the cleaning support 1 to move transversely along the screw rods 2 through a bevel gear.

By reference to FIG.2, a pair of screw rods 2 is configured.

By Reference to FIG. 1, a detachable sealing cover is also disposed on the top of the toilet for pet cats, and is also equipped with a storage space for accommodating garbage bags and deodorant.

The present invention provides a defecation place for pet cats, realizes automatic cleaning of excrement of pet cats, is convenient to use, high in automation degree and ingenious in structural design and has wide prospects of popularization and application.

## Claims

1. A toilet for pet cats, wherein,
the toilet comprises a grid layer allowing the pet cat to excrete, a group of cat litter isolation boards (7) which are simultaneously openable and closeable under the driving of a connecting rod frame (6) which are disposed on the lower portion of the grid layer, and the cat litter isolation boards (7) are locked via a cat litter valve (5);
a cleaning support (1) capable of moving transversely is disposed above the grid layer and moves transversely along the direction of screw rods (2) under the driving of a main drive gearbox (3), and a cleaning fork (1a) is disposed under the cleaning support (1);
when the toilet is at an initial state, the cat litter isolation boards (7) are closed, the cleaning support (1) is at an initial position, configured to inject the cat litter is onto the grid layer from a cat litter storage chamber (11) on the upper side via a semi-closed rotating shaft (12), and configured to move the cleaning support (1) transversely to push the cat litter to be flat and to push redundant cat litter into a cat litter collecting box (10); and
when the toilet is at a working state, after the cat litter adsorbs excrement of the pet cat, the cleaning support (1) is configured to move transversely to trigger a one-way lock of the cat litter valve (5), to synchronously open the cat litter isolation boards (7) under the driving of the connecting rod frame (6), to gradually bled the cat litter into the cat litter collecting box (10) on the lower side via the grid layer, and meanwhile, the cleaning fork (1a) is configured to push the excrement of the cat to continuously move transversely till the cleaning support (1) pushes a sealing cover (14) open, the excrement of the cat drops into a cat excrement collecting box (9), a weight inductor is used to weigh the cat excrement collecting box (9), a trigger is configured to touched when the cat excrement collecting box is opened, and a collecting box automatic-furling support (13) is configured to automatically furl to seal a bag so as to achieve a purpose of isolating smell.

2. The toilet for pet cats according to Claim 1, wherein the toilet for pet cats takes the shape of a rectangular body.

3. The toilet for pet cats according to any of the Claims 1 to 2, wherein the drive gearbox (3) drives the cleaning support (1) to move transversely along screw rods (2) via a bevel gear.

4. The toilet for pet cats according to Claim 3, wherein a pair of screw rods (2) are configured.

5. The toilet for pet cats according to any of the Claims 1 to 4, wherein a detachable sealing cover is also disposed on the top of the toilet for pet cats, and is equipped with a storage space for accommodating garbage bags and deodorant.
